# FASCICULE DE BREVET EUROPEEN

(11) **EP 0 687 840 B1**
(45) Date de publication et mention de la délivrance du brevet: **22.08.2001**
(21) Numéro de dépôt: 95401352.0
(22) Date de dépôt: 12.06.1995
(51) Int. Cl.: F16J 15/28

(54) **Presse-étoupe à montage élastique des joints d'étanchéité**
Stopfbuchse mit elastischer Montage der Dichtungen
Stuffing box with elastic mounting of the seals

(30) Priorité: 14.06.1994 FR 9407250
(43) Date de publication de la demande: 20.12.1995
(73) Titulaire: COMMISSARIAT A L'ENERGIE ATOMIQUE, 75015 Paris Cédex 15 (FR)
(72) Inventeur: De Villepoix, Raymond, F-26290 Donzère (FR); Rouaud, Christian, F-07700 Bourg Saint-Andéol (FR)
(74) Mandataire: Ilgart, Jean-Christophe

(56) Documents cités:
- EP-A- 0 485 160
- EP-A- 0 529 928
- JP-A- 2 031 082
- US-A- 4 302 020
- K. TRUTNOVSKY 'BERÜHRUNGSDICHTUNGEN' 1975 , SPRINGER VERLAG, , BERLIN 9410 * page 196, alinéa 4 - page 197; figures 21.8-21.10 *

## Description

L'invention concerne un presse-étoupe à montage élastique des joints d'étanchéité.

Les presse-étoupe sont des dispositifs d'étanchéité qui réalisent en mécanique l'étanchéité statique ou semi-dynamique au niveau de passage d'arbres ou de tiges de commande entre un milieu intérieur et un milieu extérieur. Lorsqu'il y a mouvement, celui-ci est en principe alternatif en rotation ou en translation. Les presse-étoupe sont très nombreux dans l'industrie et en particulier dans le domaine des robinets ou des vannes où chacun de ces ensembles en possède au moins un au niveau du passage de la tige de commande.

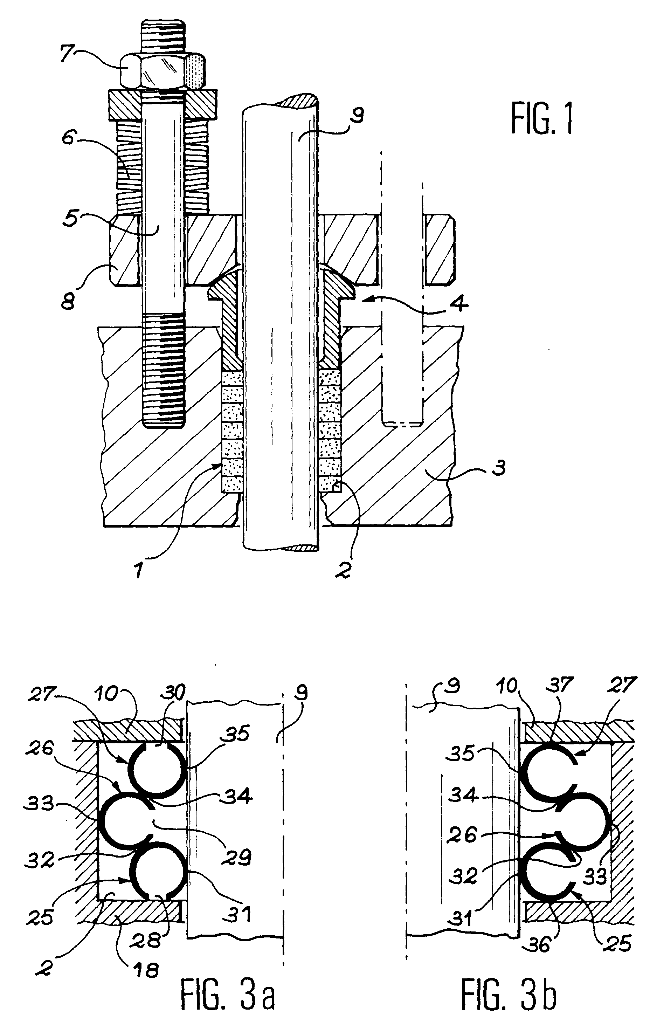

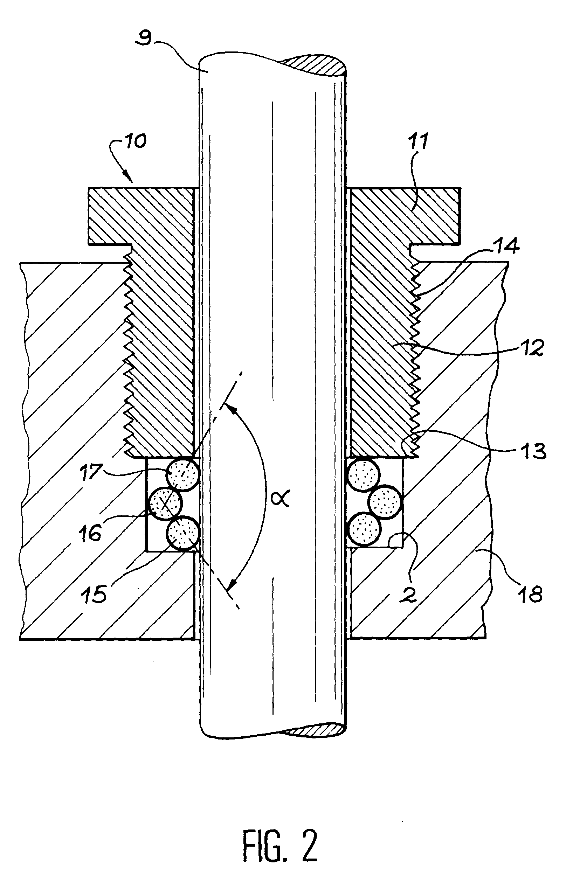

D'une façon générale un presse-étoupe est constitué, conformément à la figure 1, d'une étoupe 1 faisant office de garniture d'étanchéité et disposée dans une boîte à étoupe 2 creusée dans une pièce massive tel qu'un corps de vanne 3, d'un fouloir 4 destiné à comprimer l'étoupe 1, de goujons de serrage 5 destinés à produire l'effort de compression de l'étoupe 1, et d'un ensemble de rondelles élastiques 6, disposées ici coaxialement à la tige des goujons 5, entre les écrous de serrage 7 et un poussoir 8 du fouloir 4, pour régler commodément l'effort de compression de l'étoupe 1. La tige de manoeuvre 9, qui passe à travers des perçages du fouloir 4, de son poussoir 8 et du corps de vanne 3, s'étend également à travers la boîte à étoupe 2, et la compression axiale produite sur l'étoupe 1 se répercute en une expansion de l'étoupe 1 en sens radial contre la tige de manoeuvre 9. L'étanchéité le long de celle-ci est alors réalisée.

Suivant le type d'industrie, ou plus particulièrement suivant les conditions de service régies par la nature du fluide et les niveaux de pression et de température, des étoupes 1 de différentes natures ont été proposées, telles que des tresses à base de fils d'amiante, de fibres de carbone et de graphite, de fibres de verre, de fibres métalliques; ou des bagues superposées en graphite expansé, ou en polymères de différentes compositions à section rectangulaire, triangulaire ou en V.

Les performances d'un presse-étoupe sont variables car de nombreux paramètres entrent en jeu. Les garnitures constituées par un empilage de bagues en graphite expansé ou en PTFE (largement connu sous le nom de Téflon) nécessitent ainsi que-la boîte à étoupe 2 soit complètement fermée pour éviter qu'elle ne fuie. Pour cela, les jeux mécaniques au niveau de la tige de manoeuvre 9 doivent être réduits au strict minimum soit en resserrant les alésages du corps de vanne 3 et du fouloir 4, soit en disposant des bagues en matériau dur et aux dimensions adaptées qu'on place au fond de la boîte à étoupe 2 et sous le fouloir 4. L'étoupe 1 est alors comprimée entre les bagues en question, ce qui impose d'allonger la boîte à étoupe 2.

Le choix des étoupes est également limité aux températures élevées.

C'est pourquoi l'invention a pour objet un presse-étoupe d'une grande simplicité et offrant malgré cela d'excellentes caractéristiques d'étanchéité. Comme on le verra, on le réalise entièrement en matériaux métalliques : il résiste donc aux élévations de température. Les joints empilés qui constituent l'étoupe consistent en des joints toriques, à section annulaire ouverte, appartiennent à deux catégories, les uns ayant une face interne qui touche la tige et les autres ayant une face externe qui touche un bord périphérique de la boîte à étoupe, les joints des deux catégories étant empilés alternativement et se touchant par des surfaces de forme conique, ou d'orientation oblique au lieu d'être perpendiculaire à l'axe de la tige. L'avantage essentiel d'un tel montage, obtenu avec des joints en contact par des surfaces quasi linéaires de joints à section arrondie tels que des joints toriques, est que la conversion de la force axiale de compression de l'étoupe en force radiale d'étanchéité est garantie par le glissement des joints sur les autres aux surfaces coniques et par leur arc-boutement résultant sur la tige et la paroi de la boîte à étoupe. Ce glissement est rendu possible par le faible frottement entre les joints, qui a pour origine la nature presque filiforme de leurs surfaces de contact. Une autre propriété de ces surfaces est l'importance de la pression de contact qui s'exerce sur elles et donc l'excellence de l'étanchéité. Ces avantages sont accrus avec des joints entièrement métalliques, dont la grande élasticité et la résistance permettent à la fois des surfaces de contact très petites, une conversion facile des efforts de serrage et une compensation de l'usure causée par les mouvements de la tige, car les joints glissent alors les uns sur les autres sans variation de forme et en conservant donc les propriétés d'origine. Une excellente tenue du presse-étoupe est obtenue, car l'étanchéité est conservée après des milliers de manipulations.

On se reportera aux revendications pour une définition complète de l'invention. L'art antérieur comprend des empilements de joints de diamètres différents, touchant alternativement la tige et la boîte (JP-A-02 031 082, qui donne le préambule de la revendication 1) et des empilements droits de joints métalliques à section annulaire fendue (EP-A-0 485 160 et US-A-4 302 020), mais où l'étanchéité est produite par un écrasement des joints dû à la pénétration dans leur fente du sommet du joint voisin : tous les joints sont semblables et leurs fentes sont toutes orientées axialement.

L'invention va maintenant être décrite à l'aide des figures suivantes annexées à titre illustratif et non limitatif :
- la figure 1 déjà décrite représente un presse-étoupe de genre connu,
- la figure 2 représente un presse-étoupe conforme à l'invention,
- les figures 3a et 3b représentent deux variantes de conception de la figure 2 et illustrent la nature des joints employés dans l'invention,
- et les figures 4 et 5 représentent deux autres variantes de conception.

On retrouve à la figure 2 la boîte à étoupe 2 dans le corps de vanne (ici 18), ainsi que la tige de manoeuvre 9, et un fouloir 10 qui, par souci d'illustration d'une autre possibilité de réalisation, est un peu différent du précédent, sans que cela ait d'importance réelle. Le fouloir 10 est ici une vis creuse composée d'une tête de manipulation 11 qui s'étend au-dessus du corps de vanne 18 et d'une partie de pressage 12 engagée dans un élargissement 13 de la boîte à étoupe 2, au-dessus de celle-ci. Des filetages 14 unissent la partie de pressage 12 à l'élargissement 13. Il n'est donc pas besoin de poussoir pour le fouloir 10.

Trois joints métalliques élastiques et adjacents sont serrés et enfermés dans la boîte à étoupe 2. Ils portent les références 15, 16 et 17 vers le fouloir 10. Il s'agit de trois joints toriques et le diamètre de leurs sections est choisi en fonction de la largeur de la boîte à étoupes 2 afin que les lignes reliant deux à deux les centres de leurs sections réalisent avant le serrage un triangle isocèle dont l'angle au sommet α a une valeur comprise entre 110° et 140°. Le joint médian 16 est arc-bouté contre la face circulaire (périphérique) de la boîte à étoupe 2 par sa face externe, les joints extrêmes 15 et 17 contre la surface de la tige de manoeuvre 9 par leur face interne.

Le serrage est réalisé à écrasement déterminé, c'est-à-dire qu'il est arrêté quand le fouloir 10 bute au fond de l'élargissement 13. Les joints 15, 16 et 17 sont ainsi protégés de tout serrage excessif ou incontrôlé.

Selon certaines variantes de réalisation possible de l'invention, le joint médian 16 peut présenter une section différente des joints extrêmes, ayant par exemple un diamètre plus petit ou plus grand, le fouloir peut être une couronne métallique présentant une demi-section en forme coudée serrée sur le corps de vanne 18 par l'intermédiaire d'une boulonnerie et on peut choisir des joints métalliques par exemple parmi les joints élastiques connus sur le marché sous les noms d'Hélicoflex, C'Ring ou O'Ring. Une préférence sera donnée aux joints métalliques flexibles qui possèdent une âme élastique constituée par un ressort hélicoïdal à spires jointives pour leur qualité de rémanence élastique qui permet de les serrer définitivement pour toute la durée de vie du dispositif, avec un effort immuable appliqué à l'origine. Le métal peut être de diverses natures (aluminium, argent, cuivre, laiton, inox, Inconel) en fonction de la qualité de la tige en particulier. Le métal peut être plaqué, revêtu, traité thermiquement ou chimiquement ou durci par implantation ionique, ou encore lubrifié au montage à la bombe par un aérosol de PTFE ou de graphite bisulfuré de molybdène. Les joints sont en principe de même appellation et de même nature sauf le joint central qui peut éventuellement être composé d'un métal différent de celui des autres.

Lorsque les joints composant la garniture sont d'espèce Hélicoflex ou C'Ring, les ouvertures de leurs enveloppes extérieures sont orientées de sorte que toutes les lignes d'étanchéité nécessaires et suffisantes en soient respectées, comme on le représente aux figures 3a et 3b.

De tels joints 25, 26 et 27 ont en effet une section annulaire ouverte, c'est-à-dire qu'il s'agit de tubes fendus. Dans l'agencement de la figure 3a, le joint 25 (placé comme le joint 15) a sa fente 28 dirigée vers le bas, c'est-à-dire contre le fond de la boîte à étoupe 2, le joint médian 26 (placé comme le joint 16) a sa fente 29 dirigée vers l'intérieur et le joint supérieur 27 (placé comme le joint 17) a sa fente 30 dirigée vers le haut, c'est-à-dire contre le fond du fouloir 10.

L'étanchéité au fluide est alors sauvegardée par les barrières d'étanchéité circulaires 31, 32 et 33 disposées respectivement entre le premier joint 25 et la tige de manoeuvre 9, les deux premiers joints 25 et 26, et le joint médian 26 et la paroi circulaire de la boîte à étoupe 2. D'autres barrières 34 et 35 existent entre les deux derniers joints 26 et 27 et le joint supérieur 27 et la tige de manoeuvre 9 et parachèvent l'étanchéité.

La boîte à étoupe 2 a sensiblement une largeur annulaire égale à trois fois le rayon de section des joints et une hauteur au plus égale à environ cinq fois et demie le rayon des joints. On peut les choisir plus précisément pour que l'étanchéité puisse être obtenue sans provoquer d'effort de frottement pénalisant pour les mouvements de translation ou de rotation de la tige de manoeuvre, c'est-à-dire qu'on évite de trop comprimer les joints dans une boîte à étoupe trop petite.

Les joints 15 à 17, ou 25 à 27, s'appuient les uns sur les autres par des surfaces inclinées, c'est-à-dire de forme conique, qui garantissent qu'ils glissent les uns sur les autres avec le mouvement radial souhaité pour établir les arc-boutements d'étanchéité.

On retrouve les joints 25 à 27 sur la figure 3b, mais les fentes 28 et 30 des enveloppes des deux joints extrêmes 25 et 27 donnent vers la paroi circulaire de la boîte à étoupe 2. Les barrières d'étanchéité 31 à 35 subsistent. Deux autres 36 et 37 apparaissent même entre le premier joint 25 et le fond de la boîte à étoupe 2, et entre le troisième joint 27 et le fond du fouloir 10. On peut donc supposer que l'étanchéité sera encore mieux observée.

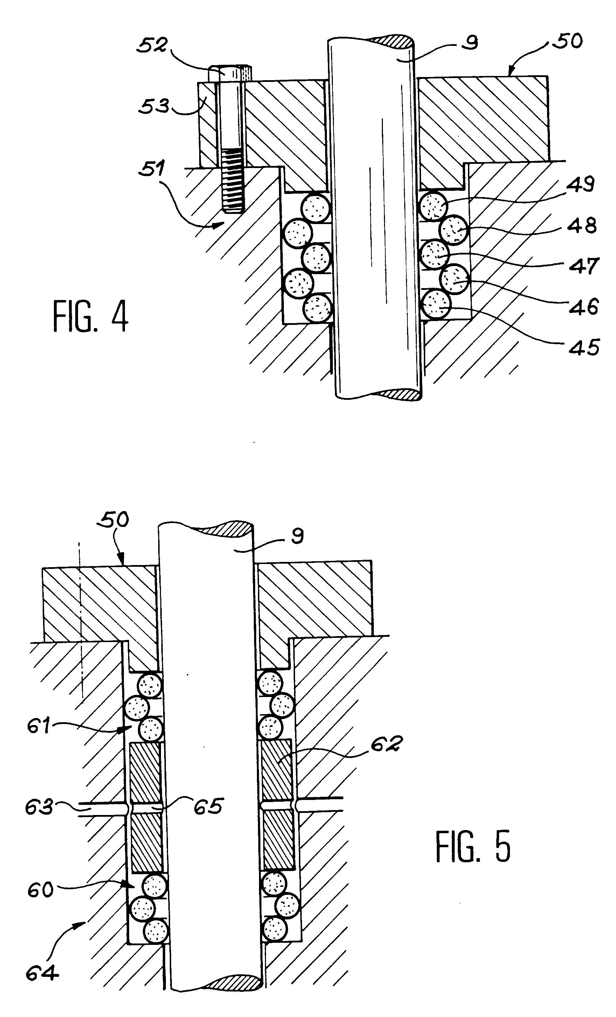

La figure 4 est une vue en demi-coupe illustrant un autre mode de réalisation dans lequel la garniture d'étanchéité est constituée de cinq joints métalliques adjacents numérotés de 45 à 49 vers un fouloir 50. Les joints d'ordre impair 45, 47 et 49 s'appuient contre la tige de manoeuvre 9 comme les joints 25 et 27 de la réalisation précédente, et les autres 46 et 48 s'appuient contre la paroi circulaire de la boîte à étoupe 2. Cette configuration améliore le guidage de la tige de commande 9 et peut être préférée dans les circuits à très haute pression, car l'étanchéité est plus facile à maintenir.

On remarque que le fouloir 50 a une demi-section coudée et est appliqué sur le corps de vanne, ici 51, par des vis 52 engagées à travers la couronne extérieure 53 du fouloir 50 qui constitue une bride.

La figure 5 illustre un presse-étoupe selon l'invention où la garniture d'étanchéité est constituée par deux ensembles de trois joints métalliques comme dans les figures 2 et 3 et séparés par une pièce mécanique appelée lanterne 62. Cette disposition permet de contrôler en permanence l'étanchéité du presse-étoupe ou éventuellement d'introduire un fluide de lubrification ou d'amélioration de l'étanchéité en utilisant un orifice 63 prévu à cet effet dans le corps de vanne 64. La lanterne 62 est une bague cylindrique traversée par un orifice 65 qui prolonge celui 63 du corps de vanne 64.

Le fluide introduit dans l'assemblage passe par l'orifice 65 et atteint la tige de manoeuvre 9. Réciproquement, le fluide fuyant à travers le presse-étoupe emplirait l'orifice 63 et serait ainsi détecté.

On retrouve par ailleurs les avantages d'une bonne étanchéité et d'un bon guidage de la tige de manoeuvre 9 inhérents aux presse-étoupe pourvus d'un nombre important de joints.

Les joints doivent se prêter aux effets d'arc-boutement et de contact par des surfaces coniques de sommets dirigés alternativement vers le haut et le bas.

## Revendications

1. Presse-étoupe disposé autour d'une tige (9) engagée dans une pièce massive (18, 51, 64) dans laquelle un logement (2) est ménagé autour d'une longueur de la tige, comprenant un groupe de joints (15 à 17, 25 à 27, 45 à 49) empilés en direction de la tige dans le logement et un fouloir (10, 50) attaché à la pièce massive pour presser les joints dans le logement, les joints étant toriques et appartenant à deux catégories, les uns (15, 17, 25, 27, 45, 47, 49) ayant une face interne touchant la tige (9) et les autres (16, 26, 46, 48) ayant une face externe touchant un bord périphérique du logement, les joints des deux catégories étant empilés alternativement et se touchant par des surfaces de forme conique, caractérisé en ce que les joints sont entièrement métalliques, ont une section annulaire ouverte, trois des joints empilés successivement ayant des sections dont les centres forment un angle compris entre 110° et 140°.

2. Presse-étoupe suivant la revendication 1, où les points sont une paire de joints extrêmes (25, 27) et un joint médian (26) ou plus, caractérisé en ce que le joint médian (26), au moins, a une ouverture (29) de section annulaire dirigée dans une direction perpendiculaire à la tige.

3. Presse-étoupe suivant la revendication 1 ou 2, caractérisé en ce qu'une lanterne (62) de récupération de fuites ou d'injection de fluide dans le presse-étoupe est intercalée entre les joints.

4. Presse-étoupe suivant la revendication 1, caractérisé en ce que les joints et le fouloir sont entièrement métalliques et que leur serrage appliqué initialement est définitif donc immuable pour la durée de vie du dispositif.

## Patentansprüche

1. Stopfbuchse, eine Stange (9) umgebend, die in einem massiven Teil (18, 51, 64) steckt, in dem ein Sitz (2) über eine Länge der Stange vorgesehen ist, der eine Gruppe von Dichtungen (15 bis 17, 25 bis 27, 45 bis 49) enthält, die in Richtung der Stange in diesem Sitz gestapelt sind, und einen Stopfring (10, 50), in dem massiven Teil befestigt, um die Dichtungen in dem Sitz zusammenzupressen, wobei die Dichtungen ringförmig sind und zu zwei Kategorien gehören und die einen (15, 17, 25, 27, 45, 47, 49) dabei eine die Stange (9) berührende Innenseite haben und die anderen (16, 26, 46, 48) eine den Umfangsrand des Sitzes berührende Außenseite und die Dichtungen beider Kategorien abwechselnd gestapelt sind und sich durch konusförmige Flächen berühren,
**dadurch gekennzeichnet,**
dass die Dichtungen ganz aus Metall sind, einen offenen ringförmigen Querschnitt haben und drei der aufeinander gestapelten Dichtungen Querschnitte haben, deren Mittelpunkte einen zwischen 110° und 140° enthaltenen Winkel bilden.

2. Stopfbuchse nach Anspruch 1, wo die Dichtungen ein äußeres Dichtungspaar (25, 27) und eine mittlere Dichtung (26) oder mehr umfassen, dadurch gekennzeichnet, dass wenigstens die mittlere Dichtung (26) eine Öffnung (29) mit einem ringförmigen Querschnitt hat, die in einer zu der Stange senkrechten Richtung ausgerichtet ist.

3. Stopfbuchse nach Anspruch 1 oder 2, dadurch gekennzeichnet, dass ein Ring zur Leckrückgewinnung oder Fluideinspeisung in die Stopfbuchse zwischen den Dichtungen eingefügt ist.

4. Stopfbuchse nach Anspruch 1, dadurch gekennzeichnet, dass die Dichtungen und der Stopfring ganz aus Metall sind und dass ihr anfängliches Spannen bzw. Klemmen endgültig ist, also unveränderlich für die gesamte Lebensdauer der Vorrichtung.

## Claims

1. Packing box disposed around a rod (9) engaged in a solid element (18, 51, 64) in which a housing (2) is fitted around a length of the rod and including a set of joints (15 to 17, 25 to 27, 45 to 49) stacked in the direction of the rod in the housing and a rammer (10, 50) attached to the solid element so as to press the joints in the housing, the joints being toric and belonging to two categories, some (15, 17, 25, 27, 45, 47, 49) having an internal face touching the rod (9) and the others (16, 26, 46, 48) having an outer face touching a peripheral edge of the housing, the joints of the two categories being stacked alternately and touching by conical-shaped surfaces, characterized in that the joints are entirely metallic and have an open annular cross-section, three successively stacked joints having cross-sections whose centres form an angle between 100 and 140°.

2. Packing box according to claim 1, where the joints are a pair of end joints (24, 27) and a median joint (26) or more, characterized in that at least the median joint (26) has an opening (29) with an annular cross-section directed perpendicular to the rod.

3. Packing box according to claim 1 or 2, characterized in that a lantern (62) for recovering leaks or injecting fluid into the packing box is inserted between the joints.

4. Packing box according to claim 1, characterized in that the joints and the rammer are fully metallic and their initially applied tightening is definite and is thus fixed for the lifetime of the device.
